# EUROPÄISCHE PATENTSCHRIFT

(11) **EP 0 893 581 B1**
(45) Veröffentlichungstag und Bekanntmachung des Hinweises auf die Patenterteilung: **29.05.2002**
(21) Anmeldenummer: 98890208.6
(22) Anmeldetag: 16.07.1998
(51) Int. Cl.: F01P 3/02, F01P 7/14

(54) **Mehrwegventil**
Multiple way valve
Vanne à voies multiples

(30) Priorität: 23.07.1997 AT 125297
(43) Veröffentlichungstag der Anmeldung: 27.01.1999
(73) Patentinhaber: TCG UNITECH Aktiengesellschaft, 4560 Kirchdorf/Krems (AT)
(72) Erfinder: Pastleitner, Harald, Ing., 4400 Steyr (AT); Strauch, Joachim, Dipl.-Ing., 4400 Steyr (AT)
(74) Vertreter: Babeluk, Michael, Dipl.-Ing. Mag.

(56) Entgegenhaltungen:
- EP-A- 0 407 743
- DE-A- 2 111 354
- DE-A- 19 606 202
- GB-A- 2 258 714

## Beschreibung

Die Erfindung betrifft ein elektrisch betätigbares Mehrwegventil, insbesondere für einen Kühlmittelkreislauf einer Brennkraftmaschine, mit einem Eintrittskanal und zumindest zwei, von einem Sammelraum abzweigenden Austrittskanälen, wobei jeder Austrittskanal für sich durch jeweils einen Verschlussteil versperrbar ist und jeder Verschlussteil mit einem elektrisch ansteuerbaren Betätigungsorgan verbunden ist.

Ein Mehrwegventil mit elektrisch ansteuerbaren Stellorganen und mehreren Austrittskanälen, die über jeweils ein Verschlussorgan versperrbar sind, ist aus der DE 40 33 261 A1 bekannt. Mehrwegventile werden üblicherweise über elektromagnetische Stellorgane betätigt. Um die nötigen Schließ- und Öffnungskräfte aufbringen zu können, müssen die Sollenoide entsprechend groß dimensioniert werden. Bei zu kleiner Auslegung hingegen reichen die aufzubringenden Verstellkräfte nicht auf, um bei Festfressen des Verschlussteiles - beispielsweise durch Korrosion nach längerem Stillstand - das Ventil wieder gängig zu machen. Neben dem erhöhten Platzbedarf haben entsprechend groß ausgelegte Magnetventile allerdings den Nachteil, dass infolge der relativ hohen Beschleunigungskräfte die Betätigung mit charakteristischen und störenden Geräuschen begleitet ist, was insbesondere bei hoher Schaltfrequenz und vielen zu schaltenden Strömungswegen nicht akzeptabel ist.

Aus der DE 33 17 454 A1 ist ein Kühlsystem mit einer zwei Thermostatventile aufweisenden Steuereinheit bekannt, über welche unabhängig voneinander der Durchflussquerschnitt von zwei Steuerorganen gesteuert wird.

Die US 4 032 068 A beschreibt ein Thermostatventil mit mehreren temperaturempfindlichen Verschlussteilen. Maßnahmen zur elektronischen Betätigung sind keine vorgesehen.

Die Druckschrift DE 21 11 354 A behandelt ein Schwingschieberventil für Kühlmittelregler mit einem thermostatischen Arbeitselement, welches einen temperaturempfindlichen Teil aufweist. Es ist keine Maßnahme zur elektrischen Steuerung des Schwingschieberventils vorgesehen.

In der DE 29 43 091 A1 ist ein Flüssigkeitskühlsystem für eine Brennkraftmaschine mit einem Kühlwasserregelventil beschrieben, welches als Drehschieber ausgebildet ist. Das Ventil weist einen Eintrittskanal und zwei Austrittskanäle auf, die durch den Drehschieber abwechselnd geöffnet bzw. versperrt werden. In einer Ausführung weist die thermostatische Betätigungseinrichtung als Zusatzsteuereinrichtung eine Heizspirale um einen Temperaturfühler auf. Mit der Heizspirale wird direkt im Anschluss an den Startvorgang der Brennkraftmaschine die Betätigungseinrichtung so weit aufgeheizt, dass das Kühlwasserregelventil betätigt wird. Es kann nicht jeder Austrittskanal für sich durch jeweils einen Verschlussteil versperrt werden.

Die US 4 948 043 A zeigt ein Thermostatventil mit einem Dehnstoffelement, welches als Dehnstoff Wachs beinhaltet. Eine elektrische Heizung ist nicht ersichtlich.

Die GB 2 258 714 A zeigt ein elektrisch betätigtes Mehrwegventil mit temperatursensitiven elektrisch beheizbaren Dehnstoffelementen. Diese Dehnstoffelemente steuern Sitzventile beziehungsweise linear beweglich Schieber, um die Schaltfunktion des Ventils zu gewährleisten. Daher ist ein relativ großer Betätigungsweg erforderlich, was aufwendige Dehnstoffelemente bedingt.

Es ist die Aufgabe der Erfindung, die genannten Nachteile zu vermeiden, und bei einem Mehrwegventil der eingangs genannten Art auf möglichst einfache Weise die Baugröße und die Betriebsgeräusche zu vermindern.

Erfindungsgemäß wird diese Aufgabe durch die Merkmale des kennzeichnenden Teils von Anspruch 1 gelöst. Durch das elektrische Beheizen des Dehnstoffelementes kommt es zu einer Volumensvergrößerung des Dehnstoffes. Die Volumensänderungskräfte wirken dabei auf den als Drehschieber ausgebildeten Verschlussteil. Dabei ist vorteilhafterweise vorgesehen, dass die Schließstellung des Verschlussteiles mit dem erkalteten Zustand des Dehnstoffelementes und die Öffnungsstellung des Verschlussteiles mit dem erwärmten Zustand des Dehnstoffelementes korreliert. Dies hat den Vorteil, dass - eine entsprechende Dimensionierung des Heizelementes des Betätigungsorgans vorausgesetzt - eine relativ schnelle Öffnung des Verschlussteiles bewirkt werden kann. Die Schließbewegung des Verschlussteiles hingegen wird durch die Abkühlgeschwindigkeit des Dehnstoffes bestimmt, welche im allgemeinen kleiner ist als die Aufheizgeschwindigkeit. Dies kommt den Anforderungen für den Einsatz in Kühlsystemen in Kühlmaschinen entgegen, um das Kühlmittel gezielt und bei Bedarf rasch den zu kühlenden Maschinenteilen, wie etwa dem Zylinderkopf, dem Motorblock, dem Ölwärmetauscher, dem Turbolader etc. zuführen zu können. Vorteilhafterweise steht dabei jedes Betätigungsorgan mit einem elektrischen Steuergerät in Verbindung, welches über Sensoren den jeweils zu kühlenden Teil feststellt und durch Stromzufuhr zum Heizelement des Betätigungsorgans für den jeweils anzusteuernden Austrittskanal die Kühlung des betreffenden Bauteiles einleitet. Bei ausreichender Abkühlung des Bauteiles wird die Stromzufuhr wieder unterbrochen, wodurch der Verschlussteil gemäß der Abkühlgeschwindigkeit des Dehnstoffes relativ langsam wieder in seine Schließstellung zurückgeht.

Die Schließgeschwindigkeit wird durch die im Bereich der Dehnstoffelemente vorgesehene Kühleinrichtung noch erhöht.

Zur weiteren Unterstützung der Schließbewegung ist in einer besonders vorteilhaften Ausführung der Erfindung vorgesehen, dass das Betätigungsorgan einen längsverschieblichen, mit dem Dehnstoffelement verbundenen Betätigungskolben aufweist, der mit dem Verschlussteil wirkverbunden ist, wobei der Betätigungskolben über eine Membran an den Sammelraum grenzt. Dadurch wird die Rückstellung des Dehnstoffelementes noch durch den Druck des Kühlmittels unterstützt.

Gegebenenfalls kann auch noch vorgesehen sein, dass das Betätigungsorgan eine die Schließbewegung unterstützende Feder aufweist.

Zur Einsparung von Bauteilen kann vorgesehen sein, dass die Drehschieber auf einer gemeinsamen Achse drehbar angeordnet sind.

Sehr vorteilhaft ist eine erfindungsgemäße Ausführungsvariante, bei der zumindest zwei Austrittskanäle unterschiedliche Durchmesser aufweisen. Dadurch kann die Kühlmittelmenge an die jeweils zu kühlenden Bauteile angepasst werden. Obwohl jede beliebige Anzahl von Austrittskanälen möglich ist, haben sich im praktischen Einsatz Ausführungen bewährt, bei denen zwischen drei und sieben, vorzugsweise fünf Austrittskanäle ausgebildet sind.

Eine sehr einfache Herstellung ist möglich, wenn der Sammelraum im wesentlichen eine zylindrische, zylindersegmentförmige oder prismatische Form aufweist. Zweckmäßigerweise ist dabei der Eintrittskanal an einer Stirnseite des Sammelraumes angeordnet. Der Eintrittskanal kann dabei direkt an den Austritt einer Kühlmittelpumpe anschließen. Sehr vorteilhaft ist es auch, die Kühlmittelpumpe und das Mehrwegventil als eine Einheit auszubilden. Um möglichst wenig Bauraum zu beanspruchen ist es weiters vorteilhaft, wenn die Austrittskanäle, vorzugsweise in Reihe, im Mantelbereich des Sammelraumes angeordnet sind.

Die Erfindung wird anhand der Figuren näher erläutert.

Es zeigen:
- Fig. 1: eine Schrägansicht des erfindungsgemäßen Mehrwegventils,
- Fig. 2: eine Schrägansicht auf das Mehrwegventil mit einem abgenommenen Gehäuseteil, Fig. 3 einen Querschnitt gemäß der Linie III-III in Fig. 1, und
- Fig. 4: ein Blockschaltbild eines Kühlmittelkreislaufes einer Brennkraftmaschine mit dem erfindungsgemäßen Mehrwegventil.

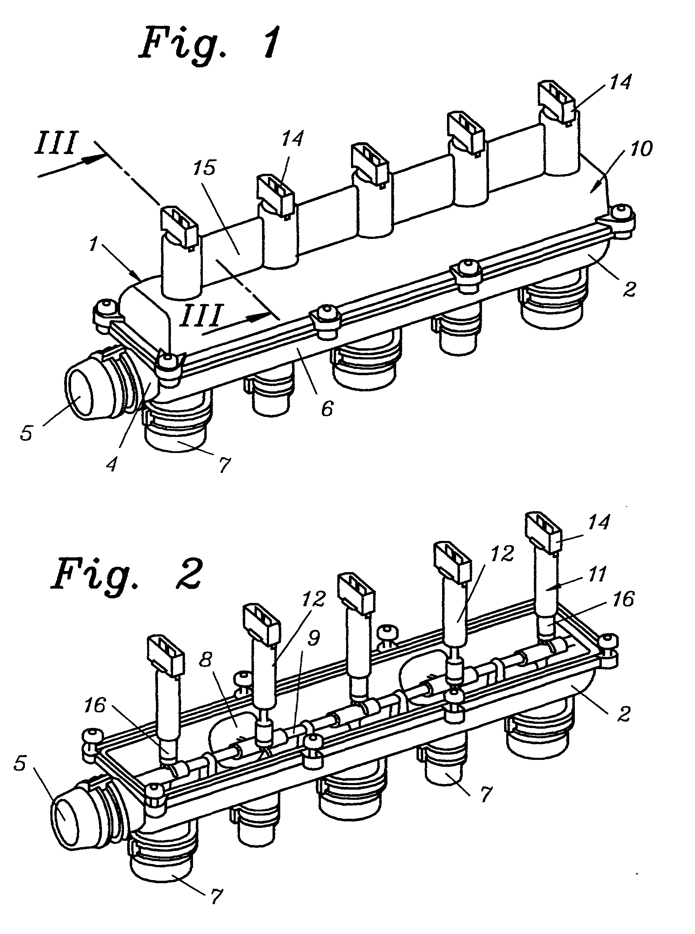

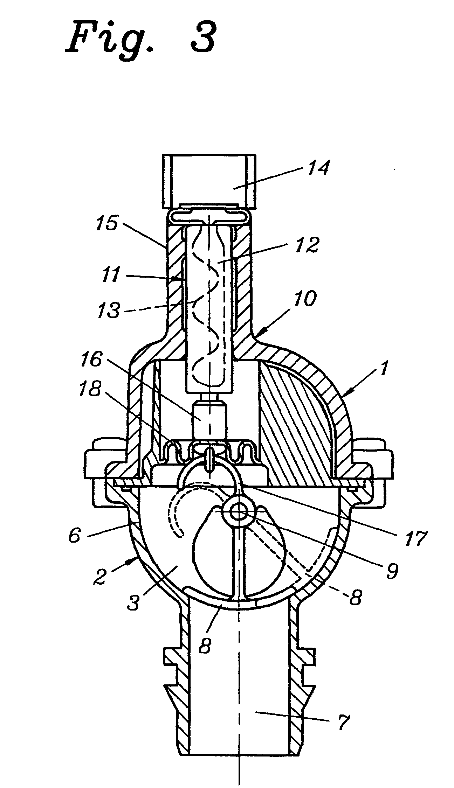

Das Mehrwegventil 1 weist in einem Gehäuse 2 einen Sammelraum 3 auf, in welchen an einer Stirnseite 4 ein Eintrittskanal 5 einmündet. Im Bereich des Mantels 6 des im Beispiel zylindersegmentförmigen Sammelraumes 3 sind fünf Austrittskanäle 7 mit teilweise unterschiedlichen Querschnitten angeordnet. Pro Austrittskanal 7 ist ein als Drehschieber ausgebildeter Verschlussteil 8 vorgesehen, wobei jeder Verschlussteil 8 für sich um eine für alle Verschlussteile 8 gemeinsame Achse 9 drehbar ist, wie aus den Fig. 2 und 3 hervorgeht.

In einem Betätigungsteil 10 des Mehrwegventils 1 ist pro Verschlussteil 8 ein Betätigungsorgan 11 vorgesehen, welches ein Dehnstoffelement 12 aufweist, dessen vorzugsweise aus Wachs bestehender Dehnstoff durch ein elektrisches Heizelement 13 erhitzt werden kann. Die Stromzufuhr zum Heizelement 13 erfolgt jeweils über einen Stecker 14. Im Bereich des Dehnstoffelementes 12 weist das Betätigungsorgan 11 eine Kühleinrichtung 15 auf, welche aus luft- oder flüssigkeitsgekühlten Kühlflächen besteht. Das Dehnstoffelement 12 ist über einen Betätigungskolben 16 mit einem Hebelarm 17 des als Drehschieber ausgebildeten Verschlussteiles 8 verbunden. Das Dehnstoffelement 12 ist von einer durch den Betätigungskolben 16 durchdrungenen Membran 18 flüssigkeitsdicht vom Sammelraum 3 getrennt.

In der Ruhestellung, in der das Heizelement 13 stromlos ist, befindet sich der Verschlussteil 8 in der in Fig. 3 durch volle Linien dargestellten geschlossenen Stellung. Wird das elektrische Heizelement 13 mit Strom beaufschlagt, kommt es zu einer Volumensvergrößerung des Dehnstoffes des Dehnstoffelementes 12, wodurch der Betätigungskolben 16 vom Dehnstoffelement 12 weggedrückt und der Verschlussteil 8 in die Öffnungsstellung verdreht wird, welche in Fig. 3 durch strichlierte Linien angedeutet ist. Somit ist die Strömungsverbindung zwischen dem Eintrittskanal 5 und dem aufgesteuerten Austrittskanal 7 freigegeben. Dabei sind auch Zwischenstellungen möglich, da die Auslenkbewegung des Betätigungskolbens 16 vom Ausmaß der Volumensänderung des Dehnstoffes und diese wiederum von der zugeführten Wärmemenge abhängt. Somit lässt sich die Stellung des Verschlussteils 8 relativ einfach durch die Höhe der zugeführten elektrischen Energie steuern.

Die Schließbewegung des Verschlussteiles 8 wird durch die Abkühlung des Dehnstoffes im Dehnstoffelementes eingeleitet, welche durch Unterbrechung bzw. Verminderung des Stromes und/oder durch Erhöhung der Kühlleistung der Kühleinrichtung 15 für das Dehnstoffelement 12 bewerkstelligt werden kann. Dadurch kommt es zur Volumensverkleinerung des Dehnstoffes und zur Rückbewegung des Betätigungskolbens 16 in die Ruhestellung. Die Rückstellung des Betätigungskolbens 16 wird dabei durch den Druck des an die Membran 18 grenzenden Kühlmittels unterstützt. Falls dies nicht ausreichend ist, kann zusätzlich noch eine Rückstellfeder für den Betätigungskolben 16 vorgesehen sein.

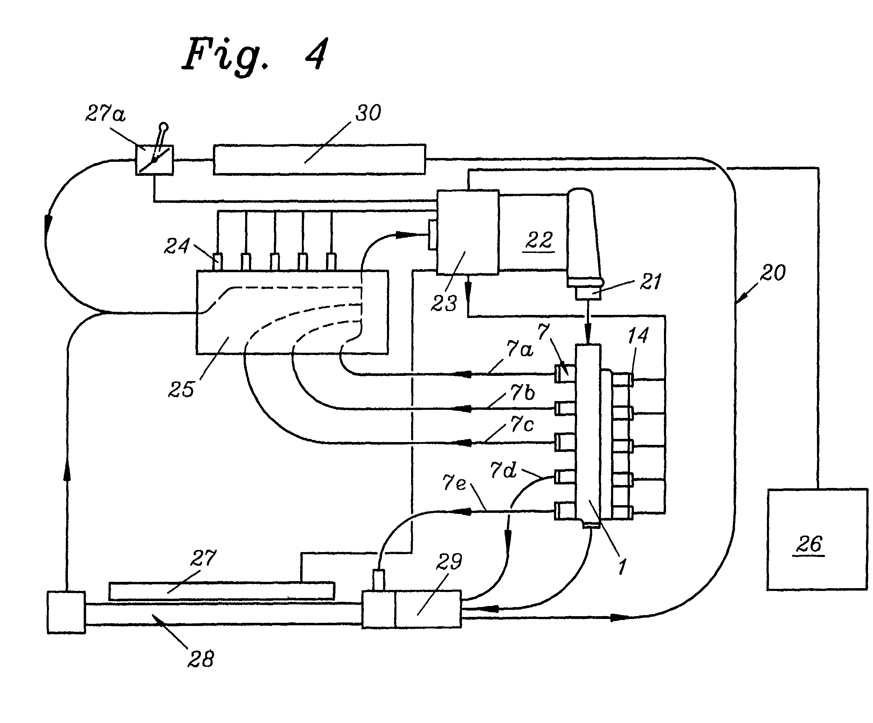

Fig. 4 zeigt ein Anwendungsbeispiel für das erfindungsgemäße Mehrwegventil 1 im Kühlmittelkreislauf 20 einer Brennkraftmaschine 25. Der Eintrittskanal 5 des Mehrwegventils 1 ist dabei an den Austritt 21 einer elektrischen Wasserpumpe 22 angeschlossen. Die Stromzufuhr zu den Steckern 14 des Betätigungsteiles 10 des Mehrwegventils 1 erfolgt dabei über eine elektrische Pumpensteuereinheit 23, welche als Eingangsgröße die Werte von den Temperatursensoren 24 an der Brennkraftmaschine 25 erhält. Die Steuereinheit 23 steht weiters mit einer Motorsteuereinheit 26, einem Wärmemengensteller 27 und dem Lüfter 27 des Kühlers 28 in Verbindung. Mit 30 ist die Fahrzeugheizung angedeutet.

Die Austrittskanäle 7 sind mit einer zum Zylinderkopf führenden Leitung 7a, einer zum Ölkühler führenden Leitung 7b und gegebenenfalls weiteren Leitungen 7c zum Turbolader und/oder zum Ladeluftkühler od. dgl. verbunden. Eine weitere Leitung 7d führt zum Ausgleichsbehälter 29 des Kühlmittels, und eine Leitung 7e führt zum Kühler 28. Dadurch lässt sich jeder zu kühlende Bauteil einzeln durch die Pumpensteuereinheit 23 ansteuern und die abzuführende Kühlmittelmenge optimal an die jeweiligen Anforderungen anpassen.

## Patentansprüche

1. Elektrisch betätigbares Mehrwegventil (1), insbesondere für einen Kühlmittelkreislauf (20) einer Brennkraftmaschine (25), mit einem Eintrittskanal (5) und zumindest zwei, von einem Sammelraum abzweigenden Austrittskanälen (7), wobei jeder Austrittskanal für sich durch jeweils einen Verschlussteil (8) versperrbar ist und jeder Verschlußteil (8) mit einem elektrisch ansteuerbaren Betätigungsorgan (11) verbunden ist, wobei jedes elektrisch ansteuerbare Betätigungsorgan (11) ein temperatursensitives, elektrisch beheizbares, kühlbares Dehnstoffelement (12) aufweist, **dadurch gekennzeichnet, dass** der Verschlussteil (8) durch einen Drehschieber gebildet ist und dass vorzugsweise zur Kühlung im Bereich der Dehnstoffelemente (12) eine Kühleinrichtung (15) vorgesehen ist.

2. Mehrwegventil (1) nach Anspruch 1, **dadurch gekennzeichnet, dass** der wärmeempfindliche Dehnstoff des Dehnstoffelementes (12) aus Wachs oder einem wachsähnlichen Material besteht.

3. Mehrwegventil (1) nach einem der Ansprüche 1 oder 2, **dadurch gekennzeichnet, dass** die Schließstellung des Verschlußteiles (8) mit dem erkalteten Zustand des Dehnstoffelementes (12) und die Öffnungsstellung des Verschlussteiles (8) mit dem erwärmten Zustand des Dehnstoffelementes (12) korreliert.

4. Mehrwegventil nach einem der Ansprüche 1 bis 3, **dadurch gekennzeichnet, dass** das Betätigungsorgan (11) eine die Schließbewegung unterstützende Feder aufweist.

5. Mehrwegventil nach einem der Ansprüche 1 bis 4, **dadurch gekennzeichnet, dass** das Betätigungsorgan (11) einen längsverschieblichen, mit dem Dehnstoffelement (12) verbundenen Betätigungskolben (16) aufweist, der mit dem Verschlussteil (8) wirkverbunden ist, wobei der Betätigungskolben (16) über eine Membran (18) an den Sammelraum (3) grenzt.

6. Mehrwegventil (1) nach einem der Ansprüche 1 bis 5, **dadurch gekennzeichnet, dass** die Drehschieber auf einer gemeinsamen Achse (9) drehbar angeordnet sind.

7. Mehrwegventil (1) nach einem der Ansprüche 1 bis 6, **dadurch gekennzeichnet, dass** zumindest zwei Austrittskanäle (7) einen unterschiedlichen Durchmesser aufweisen.

8. Mehrwegventil (1) nach einem der Ansprüche 1 bis 7, **dadurch gekennzeichnet, dass** drei bis fünf, vorzugsweise fünf Austrittskanäle (7) vorgesehen sind.

9. Mehrwegventil (1) nach einem der Ansprüche 1 bis 8, **dadurch gekennzeichnet, dass** der Sammelraum (3) im wesentlichen eine zylindrische, zylindersegmentförmige oder prismatische Form aufweist.

10. Mehrwegventil (1) nach Anspruch 9, **dadurch gekennzeichnet, dass** der Eintrittskanal (5) an einer Stirnseite (4) des Sammelraumes (3) angeordnet ist.

11. Mehrwegventil (1) nach Anspruch 9 oder 10, **dadurch gekennzeichnet, dass** die Austrittskanäle (7), vorzugsweise in Reihe, im Mantelbereich (6) des Sammelraumes (3) angeordnet sind.

12. Mehrwegventil (1) nach einem der Ansprüche 1 bis 11, **dadurch gekennzeichnet, dass** die Betätigungsorgane (11) mit einem elektronischen Steuergerät (23) verbunden sind.

## Claims

1. An electrically actuatable multiple-way valve (1), in particular for a coolant circulation (20) of an internal combustion engine (25), with an inlet duct (5) and at least two outlet ducts (7) branching off from a collecting chamber, with each outlet duct per se being closable by one locking part (8) and each locking part (8) being connected with an electrically triggerable actuating member (11), wherein each electrically triggerable actuating member (11) comprises a temperature-sensitive, electrically heatable extensible material element (12), **characterized in that** the locking part (8) is formed by a rotary slide valve and that preferably a cooling device (15) for cooling is provided in the zone of the extensible material elements (12).

2. A multiple-way valve (1) as claimed in claim 1, **characterized in that** the heat-sensitive extensible material of the extensible material element (12) consists of wax or a wax-like material.

3. A multiple-way valve (1) as claimed in one of the claims 1 or 2, **characterized in that** the closed position of the locking part (8) correlates with the cooled state of the extensible material element (12) and the opened position of the locking part (8) correlates with the heated state of the extensible material element (12).

4. A multiple-way valve as claimed in one of the claims 1 to 3, **characterized in that** the actuating member (11) is provided with a spring supporting the closing movement.

5. A multiple-way valve as claimed in one of the claims 1 to 4, **characterized in that** the actuating member (11) is provided with a longitudinally displaceable actuating piston (16) which is connected with the extensible material element (12) and is operatively connected with the locking part (8), with the actuating piston (16) bordering the collecting chamber (3) by way of a diaphragm (18).

6. A multiple-way valve (1) as claimed in one of the claims 1 to 5, **characterized in that** the rotary slide valves are rotatably arranged on a common axle (9).

7. A multiple-way valve (1) as claimed in one of the claims 1 to 6, **characterized in that** at least two outlet ducts (7) have a different diameter.

8. A multiple-way valve (1) as claimed in one of the claims 1 to 7, **characterized in that** three to five, but preferably five outlet ducts (7) are provided.

9. A multiple-way valve (1) as claimed in one of the claims 1 to 8, **characterized in that** the collecting chamber (3) has a cylindrical, cylinder-segment-like or prismatic shape.

10. A multiple-way valve (1) as claimed in claim 9, **characterized in that** the inlet duct (5) is arranged on a face side (4) of the collecting chamber (3).

11. A multiple-way valve (1) as claimed in claim 9 or 10, **characterized in that** the outlet ducts (7), which are preferably in a row, are arranged in the jacket zone (6) of the collecting chamber (3).

12. A multiple-way valve (1) as claimed in one of the claims 1 to 11, **characterized in that** the actuating members (11) are connected with an electronic control device (23).

## Revendications

1. Soupape à plusieurs voies (1) commandée électriquement, en particulier pour un circuit de refroidissement (20) d'un moteur à combustion interne (25), avec un conduit d'entrée (5) et au moins deux conduits de sortie (7) partant d'un compartiment commun, où chaque conduit de sortie peut être obturé par un élément obturateur (8) correspondant et chaque élément obturateur (8) est relié à un organe d'actionnement (11) commandé électriquement et où chaque organe d'actionnement (11) commandé électriquement présente un élément (12) en un matériau dilatable sensible à la température et susceptible d'être chauffé électriquement et refroidi, **caractérisée en ce que** l'élément obturateur (8) est constitué par une tige rotative et **en ce que**, de préférence, une installation de refroidissement (15) est prévue pour assurer un refroidissement dans la région de l'élément (12) en un matériau dilatable.

2. Soupape à plusieurs voies (1) selon la revendication 1, **caractérisée en ce que** le matériau dilatable sensible à la chaleur de l'élément dilatable (12) est constitué par de la cire ou par un matériau cireux.

3. Soupape à plusieurs voies (1) selon la revendication 1 ou la revendication 2, **caractérisée en ce que** la position de fermeture de l'élément de fermeture (8) correspond à un état froid de l'élément en (12) un matériau dilatable et **en ce que** la position d'ouverture de l'élément de fermeture (8) correspond à un état chaud de l'élément (12) en un matériau dilatable.

4. Soupape à plusieurs voies selon l'une des revendications 1 à 3, **caractérisée en ce que** l'organe d'actionnement (11) comporte un ressort favorisant le mouvement de fermeture.

5. Soupape à plusieurs voies selon l'une des revendications 1 à 4, **caractérisée en ce que** l'organe d'actionnement (11) comporte un cylindre d'actionnement (16) qui est mobile longitudinalement, qui est connecté à l'élément (12) en un matériau dilatable et qui coopère avec l'élément de fermeture (8) et **en ce que** le cylindre d'actionnement (16) est séparé du compartiment commun (3) par une membrane (18).

6. Soupape à plusieurs voies (1) selon l'une des revendications 1 à 5,
**caractérisée en ce que** la tige rotative est montée d'une manière rotative sur un axe commun (9).

7. Soupape à plusieurs voies (1) selon l'une des revendications 1 à 6,
**caractérisée en ce qu'**au moins deux canaux de sortie (7) ont des diamètres qui sont différents.

8. Soupape à plusieurs voies (1) selon l'une des revendications 1 à 7,
**caractérisée en ce que** l'on prévoit de trois à cinq et de préférence cinq conduits de sortie (7).

9. Soupape à plusieurs voies (1) selon l'une des revendications 1 à 8,
**caractérisée en ce que** le compartiment commun (3) a une forme sensibtement cylindrique, celle d'un segment de cylindre ou une forme prismatique.

10. Soupape à plusieurs voies (1) selon la revendication 9, **caractérisée en ce que** le conduit d'entrée (5) se trouve sur un côté frontal (4) du compartiment commun (3).

11. Soupape à plusieurs voies (1) selon la revendication 9 ou la revendication 10, **caractérisée en ce que** les conduits de sortie (7) sont disposés, de préférence, en une rangée dans la région de l'enveloppe (6) du compartiment commun (3).

12. Soupape à plusieurs voies (1) selon l'une des revendications 1 à 11,
**caractérisée en ce que** l'organe d'actionnement (11) coopère avec un appareil de commande électronique (23).
